# EUROPEAN PATENT SPECIFICATION

(11) **EP 0 771 279 B1**
(45) Date of publication and mention of the grant of the patent: **15.09.1999**
(21) Application number: 95925158.8
(22) Date of filing: 14.07.1995
(51) Int. Cl.: B60R 25/00

(54) **SECURITY SYSTEM**
SICHERHEITSSYSTEM
SYSTEME DE SECURITE

(30) Priority: 21.07.1994 IL 11041094
(43) Date of publication of application: 07.05.1997
(73) Proprietor: INTERNATIONAL MUL-T-LOCK B.V., NL-1083 HJ Amsterdam (NL)
(72) Inventor: ALMOSNINO, Rami, 76308 Rehovot (IL); MARKBREIT, Dani, 58003 Azor (IL)
(74) Representative: de Bruijn, Leendert C.
(86) International application number: NL9500247
(87) International publication number: WO9603296

(56) References cited:
- EP-A- 0 478 453
- EP-A- 0 489 265
- WO-A-94/04397
- DE-B- 1 181 081
- DE-U- 9 015 290
- DE-U- 9 306 958
- GB-A- 2 061 583

## Description

The present invention relates to a vehicle anti-theft system according to the preamble of claim 1.

Since the development of the automobile, motor vehicle theft has been an increasingly serious phenomenon. Various types of theft prevention systems have been proposed and commercialized, including audio alarms, vehicle electrical system interlocks and mechanical locks, preventing unauthorized operation of vehicle controls, such as the steering wheel, gear shift and brakes.

A gear shift lock manufactured and sold worldwide under U.S. Patent 4,693,099 and under the registered trademark MUL-T-LOCK by the applicant/assignee of the present invention has enjoyed significant commercial success. U.S. Patent Applications 07/787,902, 07/932,661, 08/175,111 and 08/240,184 of the applicant/assignee, the disclosures of which are incorporated by reference herein, describe further improvements of this gear shift lock, including, inter alia operation of an ancillary anti-theft system, such as an alarm, by locking or the gear shift lock. It is self-evident that locks only provide security when they are used. Often, drivers leaving their car in a hurry do not take the time to lock the gear shift lock, defeating the entire purpose of the anti-theft system.

WO 94/04397 describes a locking device for gearshift levers welded to the vehicle floor and including a housing sliding lock member, a lock and a handle. The lock member surrounds the gearshift lever and is slideable upon being pulled by the handle so as to lockingly engage the lock member in the lock and prevent movement of the gearshift lever. This device suffers the drawback that is cumbersome, needs to be designed specifically for every type of vehicle and is either difficult to install where welded to the vehicle floor at the time of installation, or easily dismountable if only screwed onto the vehicle floor.

EP-A-0 478 453 discloses a locking device for gearshift levers comprising a reciprocating locking member activated by a worm drive electric motor. The device according to EP-A-0 478 453 suffers from the drawbacks overcome by the invention in that it is cumbersome and is not inside the console thus being completely exposed and vulnerable to potential attack. Moreover, the device requires a female sealing member in order to block movement of the gearshift lever.

The present invention seeks to provide an improved vehicle anti-theft system not having the drawbacks as described above.

This aim is realized with a anti-theft system according to the preamble of claim 1 having the characterising features of claim 1.

There is thus provided in accordance with a preferred embodiment of the present invention a vehicle anti-theft system including a gear shift lock bolted to a vehicle chassis and having an axially displaceable locking shaft associated therewith which is automatically retractable out of locking engagement with a gear shift element in response to key actuation of the gear shift lock.

There is also provided in accordance with a preferred embodiment of the present invention a vehicle anti-theft system including a gear shift lock mounted to a vehicle chassis and having an axially displaceable locking shaft associated therewith which is automatically retractable out of locking engagement with a gear shift element in response to key actuation of the gear shift lock, the gear shift lock being mounted onto the vehicle chassis by means of a mounting bracket, an apertured locking bracket having an aperture through which the locking shaft extends and a second aperture through which extends a locking pin which is lockingly engaged by the gear shift lock.

In accordance with a preferred embodiment of the present invention, the locking shaft is automatically displaceable into locking engagement with a gear shift element.

Preferably, the gear shift lock is bolted to the chassis at a location which is normally out of view from the interior of the vehicle. Preferably, all or most of the gear shift lock and the shaft is normally hidden from view from the interior of the vehicle.

In accordance with a preferred embodiment of the present invention axial displacement of the locking shaft in at least one direction is provided by an electric motor, which may be responsive to manual or automatic inputs.

Further in accordance with a preferred embodiment of the present invention, the gear shift lock is operatively associated with an auxiliary vehicle anti-theft system.

Preferably, the auxiliary vehicle anti-theft subsystem is actuated at least partially upon locking of the gear shift lock and also at least partially operated by the same key used to unlock the gear shift lock.

In accordance with a preferred embodiment of the present invention, both the gear shift lock and the auxiliary vehicle anti-theft subsystem are actuatable without the use of a key and both require use of the key for deactuation.

In accordance with a preferred embodiment of the present invention the vehicle anti-theft system also comprises logic circuitry which automatically actuates the auxiliary vehicle anti-theft subsystem in response to sensing that the vehicle is unoccupied.

The logic circuitry may be incorporated in the vehicle computer or be ancillary thereto.

Preferably the logic circuitry distinguishes between a sensed vehicle unoccupied condition when the locking shaft is locked in the lock body and when it is not. For example, automatic actuation may occur more quickly when the locking shaft is locked in the lock body and less quickly when the locking shaft is not locked in the lock body.

Sensing of a vehicle unoccupied condition may be achieved by the use of one or more of the following sensors: a weight sensor in the drivers' seat, a vibration sensor, a volume sensor and an acoustic sensor.

### BRIEF DESCRIPTION OF THE DRAWINGS

The present invention will be understood and appreciated more fully from the following detailed description, taken in conjunction with the drawings in which:
Fig. 1 is partially pictorial, partially block diagram illustration of a vehicle anti-theft system constructed and operative in accordance with a preferred embodiment of the present invention;
Fig. 2 is a simplified pictorial illustration of an automobile having installed therein a key-operated gear shift lock, forming part of the system of Fig. 1;
Fig. 3 is a simplified partially cut away illustration of the apparatus of Fig. 2;
Fig. 4A is a simplified illustration of part of the lock apparatus of Fig. 3, taken along lines IV - IV in Fig. 3 in locking engagement with a gear shift element;
Fig. 4B is a simplified illustration of part of the lock apparatus of Fig. 3, taken along lines IV - IV in Fig. 3 in an unlocked arrangement;
Figs. 5A and 5B are respective sectional illustrations taken along the lines V - V in respective Figs. 4A and 4B;
Fig. 6A is a simplified illustration of a motor driven gear shift lock constructed and operative in accordance with a preferred embodiment of the present invention in a locking orientation;
Fig. 6B is a simplified illustration of a motor driven gear shift lock constructed and operative in accordance with a preferred embodiment of the present invention in an unlocked orientation;
Figs. 7A and 7B are respective sectional illustrations taken along the lines VII - VII in respective Figs. 6A and 6B; and
Fig. 8 is a flowchart illustrating operation of the vehicle anti-theft system of the present invention.

### DETAILED DESCRIPTION OF A PREFERRED EMBODIMENT

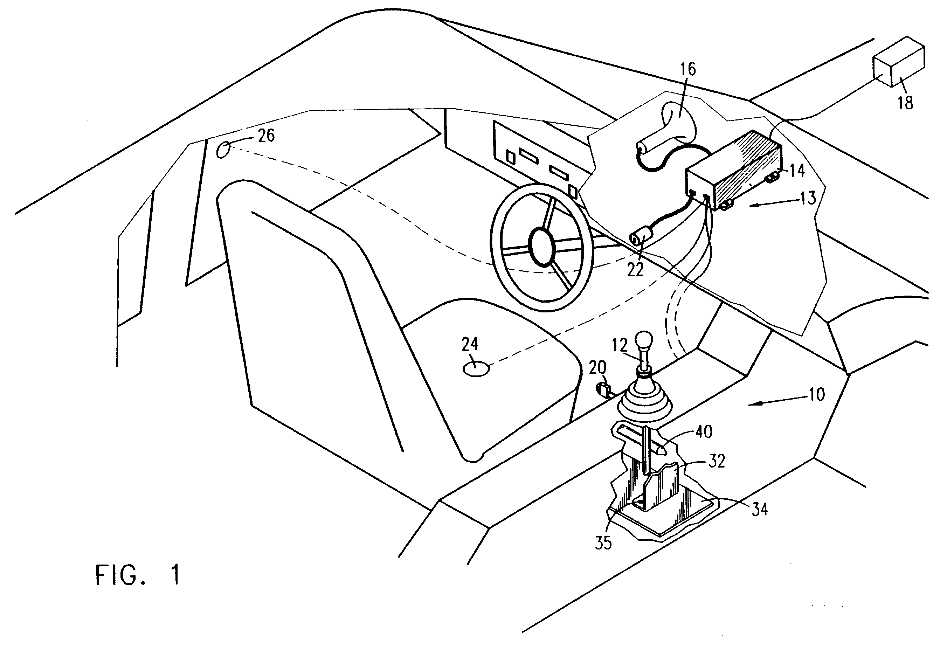

Reference is now made to Fig. 1 which illustrates a vehicle anti-theft system constructed and operative in accordance with a preferred embodiment of the present invention. The vehicle anti-theft system comprises a key-operated gear shift lock 10, which is operative to lock the gear shift of a vehicle 12 in a position preventing normal operation of the vehicle. Preferably, the gear shift lock 10 is bolted to a vehicle chassis and mainly located out of view of the vehicle occupants, as illustrated and described hereinbelow.

An auxiliary anti-theft subsystem, indicated generally by reference numeral 13, may include one or more subsystems preferably interconnected to a vehicle computer 14. These subsystems may include an audio alarm 16, a vehicle electrical system interlock 18, a visual alarm (not shown), a remote alarm (not shown) to a central monitoring system or any combination of the foregoing. The auxiliary anti-theft system is preferably operated by a user at least partially by the same key 20 used to unlock the gear shift lock 10.

Apparatus is preferably provided for preventing unauthorized bypassing of elements of the anti-theft system and preferably includes logic circuitry for identification of electrical communication signals between the various elements, so as to confirm their authenticity. Conventional digital coding of the signals may be employed for this purpose.

In accordance with a preferred embodiment of the present invention, the gear shift lock is locked, and the auxiliary vehicle anti-theft subsystem is actuated by physical locking of the gear shift lock, which need not necessarily involve use of the key 20. Alternatively, the auxiliary vehicle anti-theft subsystem may be actuated automatically in response to the absence of persons within the vehicle for a predetermined amount of time or in response to any other suitable criteria.

Automatic activation of the auxiliary vehicle anti-theft system may be initiated by the presence or absence of an electrical signal from the vehicle ignition lock 22 or by a driver weight sensor 24 located in the driver's seat, or a volume, vibration or audio sensor 26, located on the interior of the vehicle.

It is a particular feature of the present invention that deactivation of both the gear shift lock and the auxiliary vehicle anti-theft subsystem requires use of the key 20.

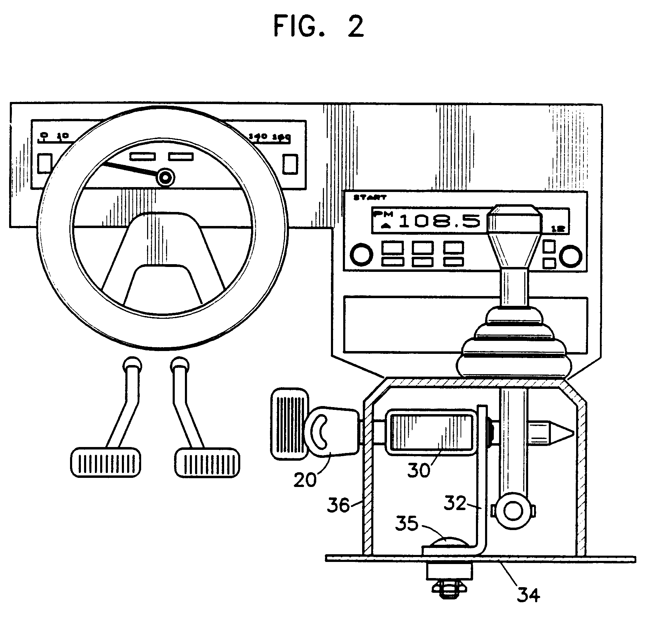

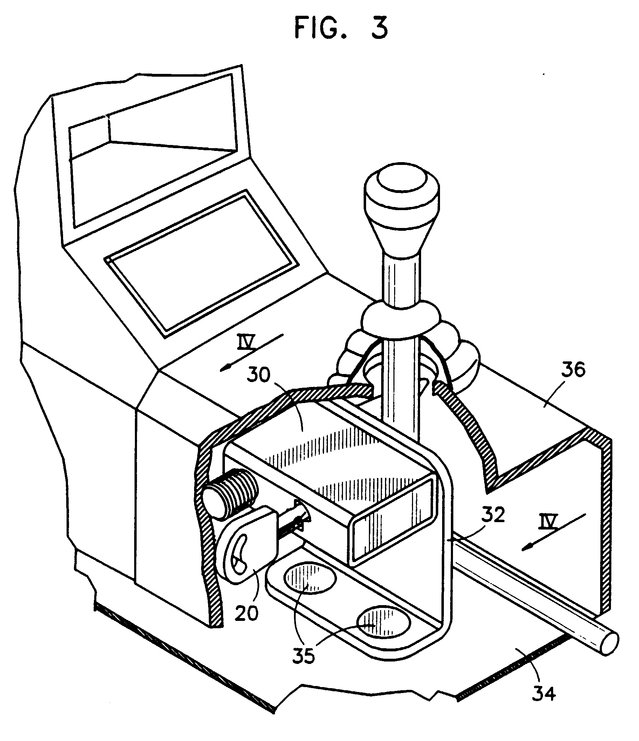

Reference is now made additionally to Figs. 2 - 5B, which illustrate a gear shift lock and key controller constructed and operative in accordance with a preferred embodiment of the present invention. As seen generally in Figs. 2 and 3, a lock body 30 is mounted on a mounting bracket 32, which is, in turn, bolted onto the vehicle chassis 34 by bolts 35 and associated shear nuts which cannot readily be removed. In the illustrated embodiment, the lock body 30 and the mounting bracket 32 are disposed entirely inside a console 36 and out of sight of the occupants of the vehicle.

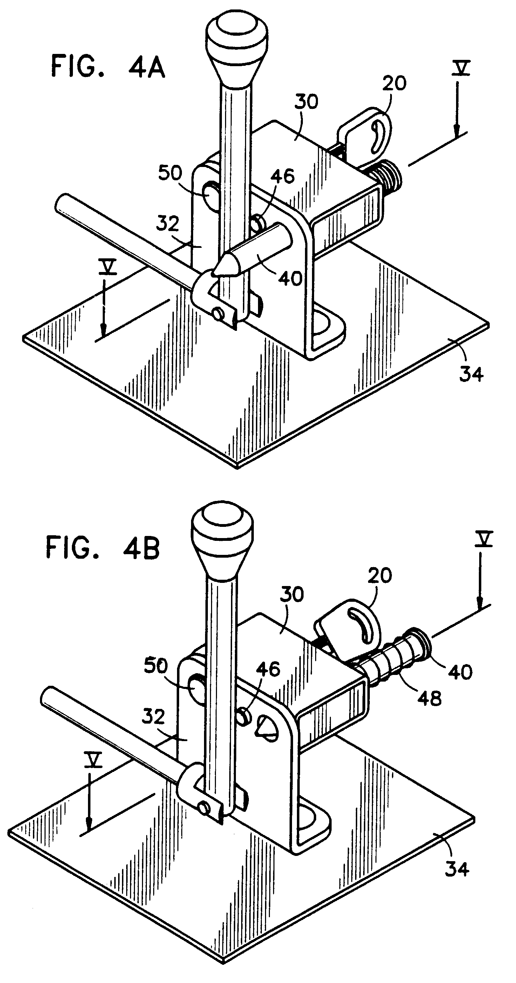

As seen even more clearly in Figs. 4A - 5B, lockably associated with lock body 30 for axial displacement relative thereto is a locking shaft 40. Locking shaft 40 is preferably formed with a notch 42, which is arranged to be lockingly engaged by mechanical latches or a locking element 44 which is selectably positioned by operation of a lock cylinder 47, disposed in lock body 30. A spring 48 is preferably provided for positioning the locking shaft 40 in a retracted orientation, when it is not retained in locking engagement by locking element 44.

It is a particular feature of the present invention that the lock body 30 is mounted onto mounting bracket 32 not only by bolts 46, but also by means of a locking pin 50 which is lockingly engaged in lock body by mechanical latches or a locking element 52 which is also positioned by lock cylinder 47. It may be appreciated that notwithstanding removal of bolts 46, the lock body 30 cannot be removed from bracket 32 as long as both locking shaft 40 and locking pin 50 are lockingly engaged by respective locking elements 44 and 52.

Additionally protection against removal of locking pin 50 is provided by a retaining pin 57 which engages a notch 59 in locking pin 50.

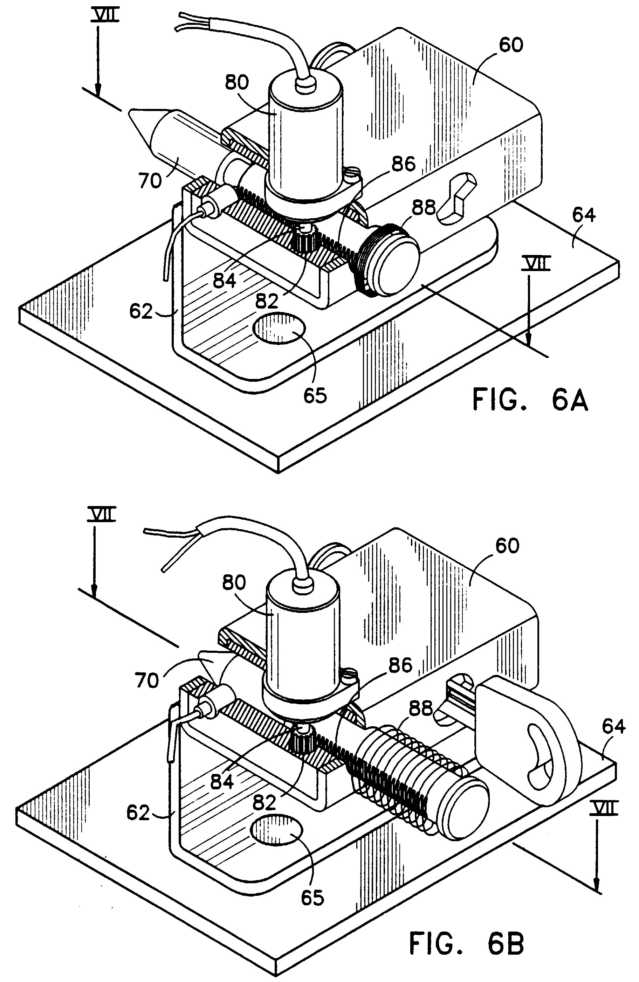

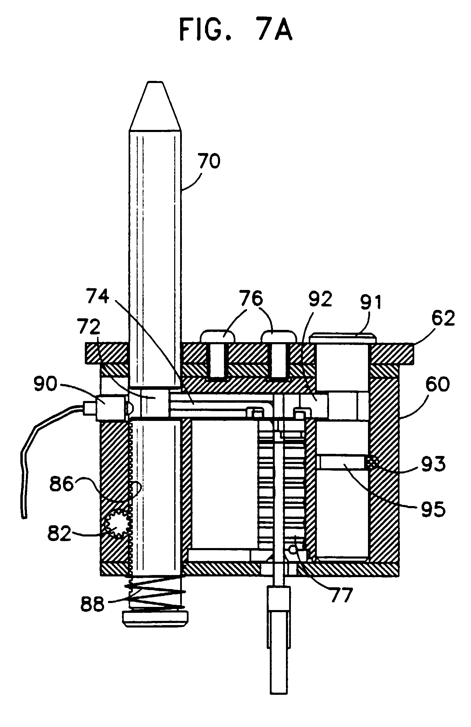

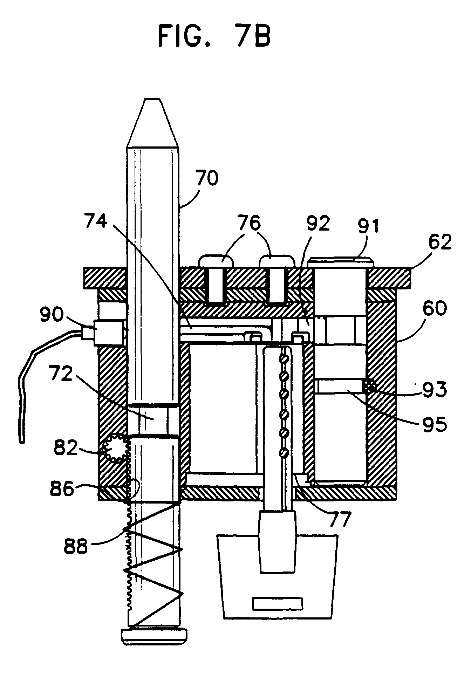

Reference is now made additionally to Figs. 6A - 7B, which illustrate an electrically driven gear shift lock and key controller constructed and operative in accordance with a preferred embodiment of the present invention.

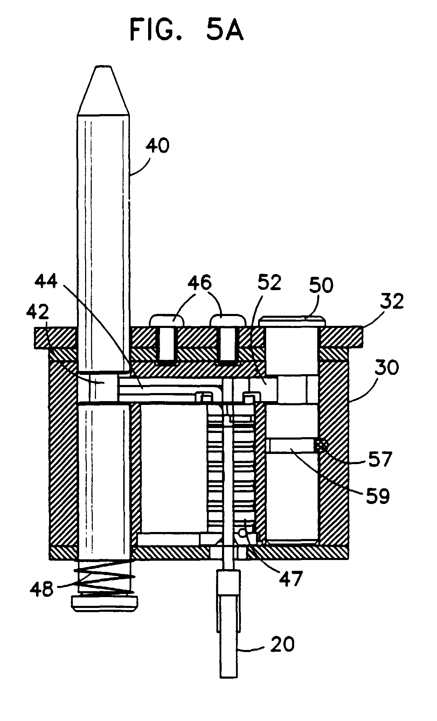

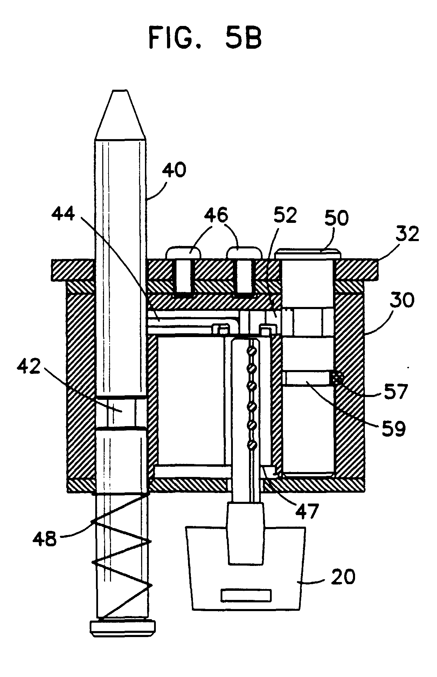

As in the embodiment described hereinabove in connection with Figs. 2 - 5B, a lock body 60 is mounted on a mounting bracket 62, which is, in turn, bolted onto the vehicle chassis 64 by bolts 65. Lockably associated with lock body 60 for axial displacement relative thereto is a locking shaft 70. Locking shaft 70 is preferably formed with a notch 72, which is arranged to be lockingly engaged by mechanical latches or a locking element 74 which is selectably positioned by operation of a lock cylinder 77, disposed in lock body 60.

An electrically operated drive, such as a motor 80 is operative to provide selective linear displacement of locking shaft 70 at least into and possibly also out of locking engagement with locking element 74. In the illustrated embodiment, motor 80 is provided with a gear 82 mounted on an output shaft 84 thereof. Gear 82 engages threading 86 formed on a side of locking shaft 70.

Alternatively any other electric or automatically controllable drive may be employed instead of motor 80, such as, for example, an electromagnetic actuator, linear motor or fluidic driver. A spring 88 may be provided for positioning the locking shaft 70 in a retracted orientation, when it is not retained in locking engagement by locking element 74.

A sensor 90, such as a microswitch, may be provided for sensing locking engagement of the locking shaft 70 with the lock, and more particularly with locking element 74.

It will be appreciated that the provision of an electrically controllable drive for effectively locking the gear shift lock enables the gear shift lock to be automatically locked, without driver intervention and notwithstanding driver inaction. The automatic locking is preferably based on predetermined criteria, such a sensed vehicle unoccupied condition.

The electrically controllable driver or other automatically controllable drive may also be operative to automatically lock the gear shift lock in response to removal of an ignition key from the ignition, turning off the ignition or any other ignition related action, with or without a delay.

As in the embodiment of Figs. 2 - 5B, it is a particular feature of the present invention that the lock body 60 is mounted onto mounting bracket 62 not only by bolts 76, but also by means of a locking pin 91 which is lockingly engaged in lock body by mechanical latches or a locking element 92 which is also positioned by lock cylinder 77. It may be appreciated that notwithstanding removal of bolts 76, the lock body 60 cannot be removed from bracket 62 as long as both locking shaft 70 and locking pin 91 are lockingly engaged by respective locking elements 74 and 92.

Additionally protection against removal of locking pin 91 is provided by a retaining pin 93 which engages a notch 95 in locking pin 91.

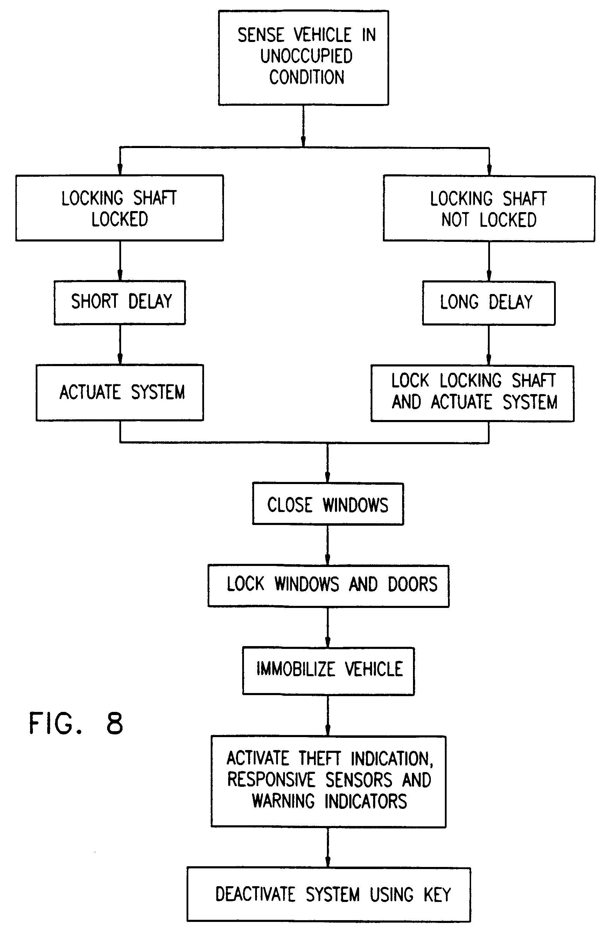

Reference is now made to Fig. 8, which is a flow chart illustration of the automatic operation of the vehicle anti-theft system of Figs. 6A - 7B in accordance with a preferred embodiment of the present invention.

Actuation of the system is preferably automatic, in response to the sensed unoccupied condition of the vehicle, as indicated, for example by sensors 24 and 26 (Fig. 1). If the locking shaft 70 is locked, as sensed by microswitch 90, the system is actuated after a relatively short delay, such as 10 seconds. If the locking shaft 70 is not locked, as indicated by microswitch 90, the system is actuated after a relatively long delay, such as 5 minutes, and motor 80 is actuated to displace the locking shaft 70 so that it becomes locked by locking element 74.

The difference in the delay to automatic actuation is to permit a user to leave the vehicle for a very short time without actuation of the system. Preferably automatic actuation does not occur unless the gear shift is in a non-forward drive position such as park or reverse. This is to ensure that the gear shift lock is not inadvertently actuated while the vehicle is motion. Existing microswitches associated with the gear shift mechanism in conventional vehicles may be employed to effect this feature.

Upon automatic actuation of the system, the vehicle windows are automatically closed and the doors and windows are automatically locked. The vehicle is preferably immobilized by interlock apparatus 18. Various theft indication responsive sensors and warning indicators described above may also be actuated.

In accordance with a preferred embodiment of the invention, deactivation of the vehicle theft system requires at least insertion and preferably rotation of key 20.

It will be appreciated by persons skilled in the art that the present invention is not limited by what has been particularly shown and described hereinabove. Rather the scope of the present invention is defined only by the claims which follow:

## Claims

1. Vehicle anti-theft system comprising:
a gear shift lock (10) that is operable by a key (20) and which is secured to a chassis of the vehicle proximate to a gear shift element of the vehicle and being located at least partially within a gearshift console of the vehicle;
the lock having an axially displaceable locking shaft (40,70) which is displaceable between extended and retracted positions and which is automatically retractable from its extended position to its retracted position in response to key actuation of the lock;
the lock having a first mechanical latch (44,74) for locking the shaft in its extended position, the first latch being releasable from the shaft by action of the key; and
the lock being positioned so that when the shaft is in its extended position it is in locking engagement adjacent to and with the gear shift element and when in its retracted position it is out of said locking engagement,
characterised in that
a locking pin (50,91) is provided for locking the lock to its mounting (32) and in which the lock has a second mechanical latch (52,92) engageable with the pin, the second latch being releasable from the shaft by action of the key.

2. Vehicle anti-theft system as claimed in claim 1, which includes a mounting bracket (32,62) which is fast with the chassis, the lock being fixed to the bracket.

3. Vehicle anti-theft system as claimed in one of the previous claims, which includes a driver (80) for displacing the locking shaft axially in at least one direction.

4. Vehicle anti-theft system as claimed in claim 3, in which the locking shaft is automatically displaceable by the driver into its extended position in response to an actuation signal.

5. vehicle anti-theft system as claimed in claim 3 or 4, in which the driver is an electric motor (80).

6. Vehicle anti-theft system as claimed in any one of the preceding claims, which includes an auxiliary vehicle anti-theft subsystem (13) and the lock is operatively associated with the subsystem.

7. Vehicle anti-theft system as claimed in claim 6, in which both the lock and the subsystem are actuable without the use of a key and both require use of the key for deactuations.

8. Vehicle anti-theft system as claimed in claim 7, which includes a vehicle occupation sensor (24) for sensing when the vehicle is unoccupied and logic circuitry responsive to the vehicle occupation sensor for automatically actuating the lock and the subsystem on sensing that the vehicle is unoccupied.

9. Vehicle anti-theft system as claimed in claim 8, which includes a vehicle computer and the computer incorporates the logic circuitry.

10. Vehicle anti-theft system as claimed in claim 9, in which the lock has a shaft position sensor (30) for sensing when the shaft is in its extended position and the logic circuitry is responsive to the shaft position sensor, the logic circuitry distinguishing between a sensed vehicle unoccupied condition when the shaft is in its extended position and when it is not.

11. Vehicle anti-theft system as claimed in claim 10 ,in which automatic actuation occurs more quickly when the shaft is in its extended position than when it is in its retracted position.

12. Vehicle anti-theft system as claimed in any one of the preceding claims, in which the vehicle occupation sensor is a weight sensor in a driver's seat of the vehicle, a vibration sensor, a volume sensor or an acoustic sensor.

## Patentansprüche

1. Fahrzeugdiebstahlsicherungssystem mit:
einer Gangschaltungsverriegelung (10), die durch einen Schlüssel (20) betreibbar ist und an einem Chassis des Fahrzeugs nahe einem Gangschaltungselement des Fahrzeugs befestigt ist und mindestens teilweise in einer Gangschaltkonsole des Fahrzeugs angeordnet ist;
wobei die Verriegelung einen axial verschiebbaren Verriegelungsschaft (40, 70) aufweist, der zwischen ausgefahrenen und eingezogenen Stellungen verstellbar ist und der automatisch aus seiner ausgefahrenen Stellung zu seiner eingezogenen Stellung als Reaktion auf eine Schlüsselbetätigung der Verriegelung einziehbar ist;
die Verriegelung eine erste mechanische Schnappvorrichtung (44, 74) aufweist zum Verriegeln des Schaftes in seiner ausgefahrenen Stellung, wobei die erste Schnappvorrichtung vom Schaft durch die Funktion des Schlüssels lösbar ist; und
die Verriegelung so angeordnet ist, daß wenn der Schaft sich in seiner ausgefahrenen Stellung befindet, er sich benachbart dem Gangschaltungselement und mit ihm in Verriegelungseingriff befindet, und wenn er sich in seiner eingezogenen Stellung befindet, sich nicht in Verriegelungseingriff befindet,
dadurch gekennzeichnet, daß
ein Verriegelungsstift (50, 91) vorgesehen ist, zum Verriegeln der Verriegelung an ihrer Befestigung (32) und daß die Verriegelung eine zweite mechanische Schnappvorrichtung (52,92) aufweist, die mit dem Stift in Eingriff gebracht werden kann, wobei die zweite Schnappvorrichtung vom Schaft durch die Funktion des Schlüssels lösbar ist.

2. Fahrzeugdiebstahlsicherungssystem nach Anspruch 1, die einen Befestigungsträger (36,62) aufweist, der mit dem Chassis fest verbunden ist, wobei die Verriegelung am Träger befestigt ist.

3. Fahrzeugdiebstahlsicherungssystem nach einem der vorhergehenden Ansprüche, das eine Antriebsvorrichtung (80) zum axialen Verschieben des Verriegelungsschaftes in mindestens eine Richtung aufweist.

4. Fahrzeugdiebstahlsicherungssystem nach Anspruch 3, in dem der Verriegelungsschaft automatisch als Reaktion auf ein Betätigungssignal durch die Atriebsvorrichtung in seine ausgefahrene Stellung verstellbar ist.

5. Fahrzeugdiebstahlsicherungssystem nach Anspruch 3 oder 4, in dem die Antriebsvorrichtung ein Elektromotor (80) ist.

6. Fahrzeugdiebstahlsicherungssystem nach einem der vorhergehenden Ansprüche, das ein Hilfsfahrzeugdiebstahlsicherungsteilsystem (13) aufweist, wobei die Verriegelung wirksam mit dem Teilsystem verbunden ist.

7. Fahrzeugdiebstahlsicherungssystem nach Anspruch 6, in dem sowohl die Verriegelung als auch das Teilsystem ohne die Verwendung eines Schlüssels betätigbar sind und beide die Verwendung des Schlüssels zur Deaktivierung benötigen.

8. Fahrzeugdiebstahlsicherungssystem nach Anspruch 7, das einen Fahrzeugbesetzungssensor (24) aufweist, zum Wahrnehen, ob das Fahrzeug unbesetzt ist, und einen Logikschaltkreis, der auf den Fahrzeugbesetzungssensor anspricht, um automatisch bei Wahrnehmen, daß das Fahrzeug unbesetzt ist, die Verriegelung und das Teilsystem zu betätigen.

9. Fahrzeugdiebstahlsicherungssystem nach Anspruch 8, das einen Fahrzeugcomputer aufweist, wobei der Computer den Logikschaltkreis enthält.

10. Fahrzeugdiebstahlsicherungssystem nach Anspruch 9, in dem die Verriegelung einen Schaftstellungssensor (30) aufweist, zum wahrnehmen, ob der Schaft sich in seiner ausgefahrenen Stellung befindet, und der Logikschaltkreis auf den Schaftstellungssensor anspricht, wobei der Logikschaltkreis zwischen eine unbesetzten Fahrzeugzustand unterscheidet, wenn der Schaft sich in seiner ausgefahrenen Stellung befindet und wenn er sich nicht darin befindet.

11. Fahrzeugdiebstahlsicherungssystem nach Anspruch 10, in dem eine automatische Betätigung schneller stattfindet, wenn der Schaft sich in seiner ausgefahrenen Stellung befindet, als wenn er sich in seiner eingezogenen Stellung befindet.

12. Fahrzeugdiebstahlsicherungssystem nach einem der vorhergehenden Ansprüche, in dem der Fahrzeugbesetzungssensor ein Gewichtssensor in einem Fahrersitz des Fahrzeugs, ein Schwingungssensor, ein Volumensensor oder ein akustischer Sensor ist.

## Revendications

1. Système anti-vol pour véhicule, dans lequel :
un verrou de changement de vitesse (10) est commandé par une clé (20) et est fixé à un châssis du véhicule près d'un élément de changement de vitesse du véhicule, et est situé au moins partiellement dans une console de changement de vitesse du véhicule ;
le verrou comprend un arbre de blocage (40, 70) mobile axialement, pouvant étre déplacé entre des positions étendue et rétractée, et étant automatiquement rétractable de sa position étendue à sa position rétractée en réponse à l'activation de la clé du verrou :
le verrou comprend un premier loquet mécanique (44, 74) destiné à bloquer l'arbre dans sa position étendue, le premier loquet pouvant être libéré de l'arbre par l'action de la clé : et le verrou étant positionné de telle sorte que lorsque l'arbre est dans sa position étendue, il est en engagement de verrouillage à côté de et avec l'élément de changement de vitesses, et lorsqu'll est dans sa position rétractée, il est sorti dudit engagement de verrouillage, caractérisé en ce que une goupille de verrouillage (50,91) est prévue pour fixer le verrou à sa fixation (32), le verrou comportant un deuxième loquet mécanique (52, 92) pouvant s'engager avec la goupille, ledit deuxième loquet pouvant être libéré de l'arbre par i'action de la clé.

2. Système anti-vol pour véhicule selon la revendication 1, comportant une patte de montage (32, 82) solidaire du chassis, le verrou étant fixé à la patte.

3. Système anti-vol pour véhicule selon l'une des revendications précédentes, comportant un entraîneur (80) destiné à déplacer l'arbre de verrouillage axialement, dans au moins une direction.

4. Système anti-vol pour véhicule selon la revendication 3, dans lequel l'arbre de verrouillage peut être automatiquement déplacé par l'entraîneur dans sa position étendue, en réponse à un signal d'activation.

5. Système anti-vol pour véhicule selon la revendication 3 ou 4, dans lequel l'entraîneur est un moteur électrique (80).

6. Système anti-vol pour véhicule selon l'une quelconque des revendications précédentes, comportant un sous-système anti-vol auxiliaire pour véhicule (13), le verrou étant associé en fonctionnement avec le sous-système.

7. Système anti-vol pour véhicule selon la revendication 6, dans lequel à la fois le verrou et le sous-système peuvent étre activés sans l'utilisation d'une clé, mais l'un et l'autre nécessitent l'utilisation de la clé pour être désactivés.

8. Système anti-vol pour véhicule selon la revendication 7, comportant un capteur d'occupation de véhicule (24) destiné à détecter si le véhicule est inoccupé, et des circuits logiques réagissant au capteur d'occupation du véhicule pour activer automatiquement le verrou et le sous-système, lorsqu'il a été capté que le véhicule est inoccupé.

9. Système anti-vol pour véhicule selon la revendication 8, comportant un ordinateur de bord, ce dernier renfermant les circuit logiques.

10. Système anti-vol pour véhicule selon la revendication 9, dans lequel le verrou a un capteur de position d'arbre (30) destiné à capter le moment où l'arbre est dans sa position étendue, et les circuits logiques réagissent au capteur de position d'arbre, les circuits logiques faisant la distinction entre un état inocoupé d'un véhicule lorsque l'arbre est dans sa position étendue et lorsqu'il n'y est pas.

11. Système anti-vol pour véhicule selon la revendication 10, dans lequel l'activation automatique se produit plus rapidement lorsque l'arbre est dans sa position étendue que lorsqu'il est dans sa position rétractée.

12. Système anti-vol pour véhicule selon l'une quelconque des revendications précédentes, dans lequel le capteur d'occupation de véhicule est un capteur de poids situé dans un siège de conducteur de véhicule, un capteur de vibrations, un capteur de volume ou un capteur acoustique.
